# EUROPÄISCHE PATENTSCHRIFT

(11) **EP 2 628 707 B1**
(45) Veröffentlichungstag und Bekanntmachung des Hinweises auf die Patenterteilung: **21.02.2018**
(21) Anmeldenummer: 13168319.5
(22) Anmeldetag: 12.03.2007
(51) Int. Cl.: B67C 3/24, B65G 47/84, B67C 7/00, B65G 47/86, B29C 49/42

(54) **Verfahren und Vorrichtung zum Transportieren von Behältern**
Method and device for transporting containers
Procédé et dispositif destinés au transport de récipients

(30) Priorität: 14.03.2006 DE 102006012020
(43) Veröffentlichungstag der Anmeldung: 21.08.2013
(62) Teilanmeldung aus: 07723175.1
(73) Patentinhaber: Krones AG, 93073 Neutraubling (DE)
(72) Erfinder: Stoiber, Christian, 93073 Neutraubling (DE); Schmitt, Robert, 93073 Neutraubling (DE)
(74) Vertreter: Bittner, Bernhard

(56) Entgegenhaltungen:
- EP-A1- 0 005 402
- EP-A1- 1 281 644
- AT-U1- 520
- DE-A1- 3 133 341
- DE-A1- 19 740 890
- US-A1- 2002 167 185

## Beschreibung

Die Erfindung betrifft eine Klammer zum Halten von Behältern nach dem Oberbegriff von Anspruch 1, ein Verfahren zum Transportieren von Behältern, die in einem Mündungsbereich eine Wulst aufweisen, nach Anspruch 8 sowie eine Vorrichtung zum Transportieren von Behältern nach Anspruch 11. Im Bereich der Lebensmittelverpackungen erfreuen sich Flaschen aus PET (Polyethylenterephthalat) immer größerer Beliebtheit. Diese Behälter werden bei ihrer Herstellung aus Vorformlingen (Preforms) hergestellt. Preforms durchlaufen während ihrer Herstellung verschiedene Behandlungsmaschinen, die jeweils verschiedene Prozesse an ihnen durchführen. Um sie optimal handhaben zu können, weisen sie eine Wulst (den Tragring) auf, an deren Ober- bzw. Unterseite sie während des Durchlaufs durch verschiedene Behandlungsstationen gehalten werden. Auch bei dem Transport zwischen den Behandlungsstationen werden die Vorformlinge über oder unter der Wulst gehalten und übergeben. Es findet also oft ein im Wesentlichen bodenfreier Transport der Vorformlinge durch die Behandlungsmaschinen und den zwischengeschalteten Transport- und Übergabeeinrichtungen statt. Werden Behälter übergeben, so können sie jeweils nur wechselweise oben und unten an der Wulst ergriffen werden.
Die Schrift DE 37 13 016 A1 zeigt dabei so ein wechselweises Greifen von Kunststoffflaschen oben bzw. unten am Tragring. Die Flaschen werden während des gesamten Transports durch verschiedene Maschinen, Drehstationen und Übergabebereiche praktisch bodenfrei am Halskragen unterstützt bzw. geführt.

Die US 2002/0167185 A1 beschreibt eine Klammer gemäß dem Oberbegriff des Anspruchs 1. Diese Klammer weist zwei Klauen auf, die mit unterschiedlichen höhenversetzten Bereichen des Behältnisses zusammenwirken.

Ein Problem bei solchen Transport- und Übergabeverfahren bzw. Vorrichtungen ist es, dass nie zwei Handhabungsmittel hintereinander geschaltet werden können, die die Behälter jeweils an der gleichen Seite des Tragrings ergreifen. So ist es z.B. nicht möglich, einen Transferstern, der auf Grund der Übergabe von vorgeschalteten Maschinen oder Vorrichtungen den Behälter an der Unterseite des Tragrings ergreift, vor einen Luftförderer zu schalten, der seinerseits die Behälter ebenfalls unterhalb des Tragrings hält. In solchen Fällen müssen deshalb oft Zusatzeinrichtungen, wie weitere Transfersterne zwischengeschaltet werden, um vor einer Vorrichtung mit definierter Halteposition am Tragring die Behälter an der richtigen Seite haltend zur Verfügung stellen zu können.
Es ist deshalb Aufgabe der vorliegenden Erfindung, ein Verfahren, eine Vorrichtung, sowie eine Klammer zu schaffen, mit der/dem es möglich ist, eine einfachere Handhabung von Behältern, vor allem in Herstellungslinien mit vielen Übergabestationen, zu ermöglichen.
Die Aufgabe wird gelöst bezüglich der Klammer durch die Merkmale des Anspruchs 1, bezüglich des Verfahrens durch die Merkmale des Anspruchs 8 sowie bezüglich der Vorrichtung durch die Merkmale des Anspruchs 11. Die Erfindung beschäftigt sich mit einer Klammer, einer Vorrichtung sowie einem Verfahren zum Halten von Behältern, wobei unter Behälter jegliche Gefäße mit mindestens einem Mündungsbereich, einem Rumpfbereich und einem Bodenbereich zu verstehen sind, wobei der Mündungsbereich der Behälter mindestens eine Wulst aufweist, die sich zumindest teilweise am Umfang des Behälters radial nach außen erstreckt. Eine solche Wulst kann z.B. ein Tragring für Behälter sein, an dessen Unter- bzw. Oberseite der Behälter ergriffen wird, sie kann aber auch ein Verschlusssicherungsring sein, der in der Regel geringere Dimensionen aufweist als ein Tragring. Unter Wulst sind auch sonstige Erhebungen, wie z.B. Endbereiche von Gewinden oder sonstige nasenartige, sich erhebende Unterstützungsflächen zu verstehen. Dabei ist es unerheblich, ob die Wulst mit oder ohne Unterbrechungen um den Umfang des Behälters angebracht ist. Es ist weiterhin unerheblich, wie viele Wulste der Behälter aufweist.
Die Wulste befinden sich vorzugsweise im Mündungsbereich des Behälters, eine Anordnung im Bereich der Schulter bzw. des Rumpfes ist aber auch denkbar.

Die Klammer weist zwei die Behälter am Umfang ergreifende Klammerarme auf, die in der Regel so am Behälter anliegen, dass sich die Berührungsflächen bezüglich einer Längsachse der Behälter im Wesentlichen gegenüber befinden. Ein anderes Angreifen der Klammerarme ist auch denkbar, so lange ein sicheres Halten der Behälter gewährleistet ist. Erfindungsgemäß sind die Klammerarme so ausgebildet, dass sie aus einem Befestigungsbereich und einem Klemmbereich bestehen, wobei sich der Befestigungsbereich dadurch kennzeichnet, dass er Vorrichtungen zur Befestigung an einem Träger oder einer Halterung aufweist, während der Klemmbereich zum Klemmen der Behälter vorgesehen ist.
Gemäß einer bevorzugten Weiterbildung der Erfindung sind die beiden Befestigungsbereiche der Klammer so angeordnet, dass sie bezüglich einer Längsachse der Behälter höhengleich angeordnet sind. Erst in Richtung der Klemmbereiche stellt sich der Höhenversatz bezüglich der Längsachse der Behälter ein. Dieser Höhenversatz der Klemmbereiche kann auf verschiedenste Arten erzeugt werden. Zum Einen ist es möglich, die beiden Klemmbereiche dünner auszubilden als die Befestigungsbereiche, wobei die Materialeinsparung bezüglich der Befestigungsbereiche bei einem Klammerarm oben und bei dem anderen Klammerarm unten vorgenommen wird.
Der Höhenversatz kann aber auch so erzeugt werden, dass die Klemmbereiche als unabhängige Teile an die Befestigungsbereiche der Klammerarme befestigt werden, wobei bei dem einen Klammerarm der Klemmbereich an der Oberseite des Befestigungsbereichs und bei dem anderen Klammerarm der Klemmbereich an der Unterseite des Befestigungsbereichs befestigt wird.
Eine weitere Möglichkeit besteht darin, die Klemmbereiche der Klammerarme durch eine Raumwindung so anzuordnen, dass ein höhenversetztes Greifen der beiden gegenüberliegenden Klemmbereiche am Behälter möglich ist. Es versteht sich für den Fachmann von selbst, dass der Höhenversatz der Klemmbereiche der Klammerarme auf verschiedenste Arten gebildet werden kann, wobei diese drei aufgeführten Möglichkeiten nur exemplarische Ausgestaltungen sind. Erfindungsgemäß sind die beiden Klammerarme aktiv steuerbar, wobei diese aktive Steuerung vorzugsweise mittels einer Kurvensteuerung bewerkstelligt wird. Auch hier versteht sich von selbst, dass andere aktive Steuerungen vorstellbar sind.
Die Klammer kann sowohl einteilig als auch zwei- bzw. mehrteilig ausgebildet sein, wobei die bevorzugte Ausführungsform in einer zweiteiligen Ausgestaltung liegt.
Vorzugsweise besteht die Klammer teilweise aus Kunststoff, wobei aber auch andere Ausgestaltungen insbesondere Metall vorstellbar sind. Erfindungsgemäß sind die Klammerarme bezüglich der Längsachse der Behälter so höhenversetzt angeordnet, dass der eine Klemmbereich des Klammerarms unterhalb und der andere Klemmbereich des anderen Klammerarms oberhalb der Wulst angreift. Bei diesem Greifvorgang ist es irrelevant, ob es sich bei der Wulst um den Tragring, um einen Verschlusssicherungsring oder um einen Teil des Gewindes handelt. Gemäß einer bevorzugten Weiterbildung der Erfindung weist zumindest ein Klammerarm in seinem Klemmbereich eine Unterstützungsfläche auf, die sich in der gleichen Höhe befindet, wie der Klemmbereich des anderen Klammerarms.
Eine bevorzugte Weiterbildung des Verfahrens zum Transportieren von Behältern besteht darin, dass die Behälter einen Übergabebereich durchlaufen, in dem sie von einer ersten Klammer an eine zweite Klammer übergeben werden, wobei sowohl die erste Klammer als auch die zweite Klammer die Behälter oberhalb und unterhalb der Wulst ergreifen. D. h, dass die Klammern so angeordnet sind, dass der eine Klammerarm der ersten Klammer den Behälter bezüglich der Längsachse des Behälters an einer Seite des Tragrings ergreift, während ein anderer Klammerarm der zweiten Klammer den Behälter an der gegenüberliegenden Seite der Wulst ergreift. Dabei spielt es für das Verfahren keine Rolle, ob die Behälter am Tragring, am Verschlusssicherungsring oder an einer sonstigen Wulst ergriffen werden. Vorteil dieser Ausprägung des Verfahrens ist es, dass sowohl die übergebende als auch die übernehmende Klammer in gleicher Höhe angeordnet werden können, ohne dass sie bei der Übergabe der Behälter kollidieren.
Eine besonders bevorzugte Weiterbildung der Erfindung bezüglich der Vorrichtung besteht darin, dass die Klammern, die die Behälter halten, an einem Transportstern und/oder einer Transportkette befestigt sind. Dadurch sind Übergaben von Transportsternen zu Transportketten oder umgekehrt oder Übergaben von Transportketten zu Transportketten oder Übergaben von Transportsternen zu Transportsternen möglich. Auch weitere Befestigungsmittel sind denkbar, so dass eine möglichst flexible Handhabung der Behälter in einer Behälterbehandlungsanlage möglich ist.

Nachstehend werden Ausführungsbeispiele anhand der Zeichnungen näher beschrieben.

Dabei zeigt:
- Figur 1: eine Draufsicht auf eine Klammer,
- Figur 2: eine isometrische Ansicht einer Klammer,
- Figur 3: eine Frontansicht einer Klammer mit Halterung und Preform,
- Figur 4: eine Seitenansicht einer Übergabe eines Prefroms von einer Klammer zu einer anderen Klammer,
- Figur 5: eine Vergrößerung eines Bereichs der Klammer von Figur 2.

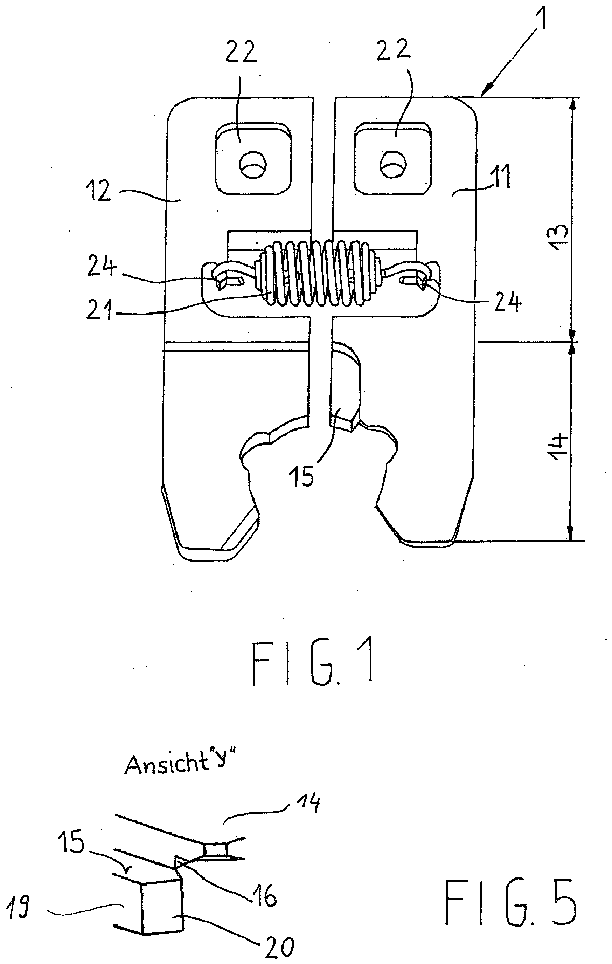

Figur 1 zeigt dabei eine Klammer 1 mit zwei Klammerarmen 11, 12, wobei jeder Klammerarm aus einem Befestigungsbereich 13 und einem Klemmbereich 14 besteht. Des Weiteren sind die Klammerarme 11, 12 jeweils mit Aussparungen 22 sowie mit Haken 24 versehen. Die Aussparungen 22 dienen dazu, um an einem Träger 23 befestigt zu werden. Die Haken 24 erfüllen die Funktion eines Halters, an dem jeweils ein Endbereich eines Federelements eingehängt wird, der die beiden Klammerarme 11, 12 durch Federkraft zusammenhält.

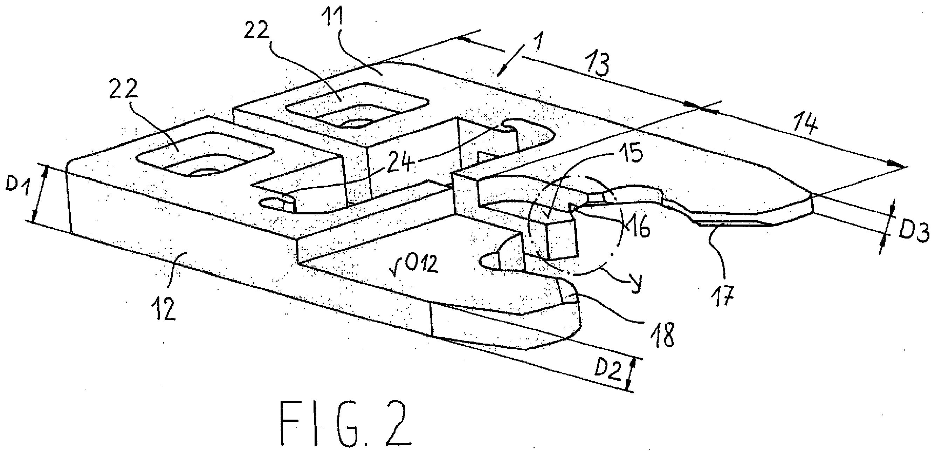

In Figur 2 wird die gleiche Klammer wie in Figur 1 dargestellt, jedoch in anderer Ansicht und ohne Federelement 21. Auch hier sind die beiden Klammerarme 11, 12 mit den jeweiligen Befestigungsbereichen 13, den Klemmbereichen 14, den Aussparungen 22 sowie den Haken 24 zu sehen. Weiterhin zeigt der Klammerarm 11 eine Einführschräge 17 sowie der Klammerarm 12 eine Einführschräge 18, wodurch ein sauberes Einführen eines Behälters in bzw. an den Klemmbereich ermöglicht wird. In Figur 2 sind die Dickenverhältnisse der Klammer 1 dargestellt. Die Klammerarme 11, 12 weisen in ihrem Befestigungsbereich 13 eine Dicke D1 auf. Die Klemmbereiche 14 der Klammerarme 11, 12 sind jeweils dünner als die Befestigungsbereiche 13, wobei die Dicke D2 des Klemmbereichs 14 des Klammerarms 12 größer ist als die Dicke D3 des Klemmbereichs 14 des Klammerarms 11. Der Klammerarm 11 weist eine Unterstützungsfläche 15 auf, die in der gleichen Ebene angeordnet ist, wie die Oberfläche O12 des Klemmbereichs 14 des Klammerarms 12. Der Unterstützungsblock 19 hat die gleiche Dicke D2 wie der Klemmbereich 14 des Klammerarms 12. Vom Unterstützungsblock 19 in Richtung einer Längsachse A an der Seite zum Klemmbereich 14 des Klammerarms 11 erstreckt sich ein Absatz 16, wobei die Höhe des Absatzes in etwa der Höhe der zu ergreifenden Wulst entspricht.

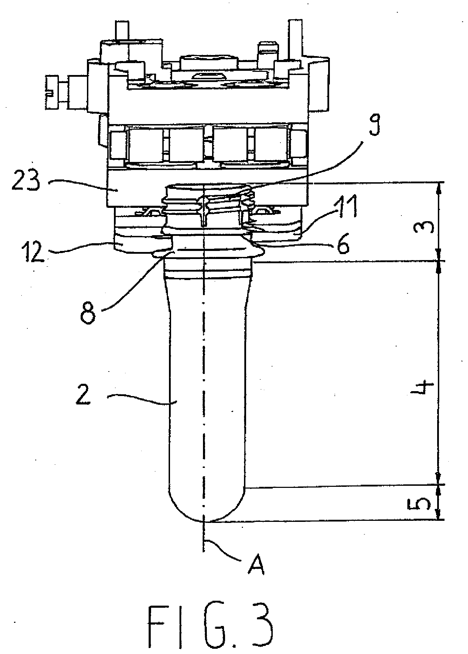

Figur 3 zeigt einen Behälter 2, der in einer Klammer 1 gehalten wird. Der Behälter weist einen Mündungsbereiche 3 einen Rumpfbereich 4 sowie einen Bodenbereich 5 auf. In dem Mündungsbereich 3 befindet sich ein Gewinde 9, eine Wulst 6 sowie ein Tragring 8. Es ist hier deutlich zu sehen, dass der Klemmbereich 14 des Klammerarms 11 oberhalb der Wulst 6 und der Klemmbereich 14 des Klammerarms 12 unterhalb der Wulst 6 des Behälters 2 angreift.

Die Klammerarme 11, 12 sind mit ihren Aussparungen 22, die hier nicht zu sehen sind, an dem Träger 23 befestigt. Der Träger 23 seinerseits ist an einer hier nicht gezeigten Vorrichtung wie z. B. einem Transportstern oder einer Kette befestigt.

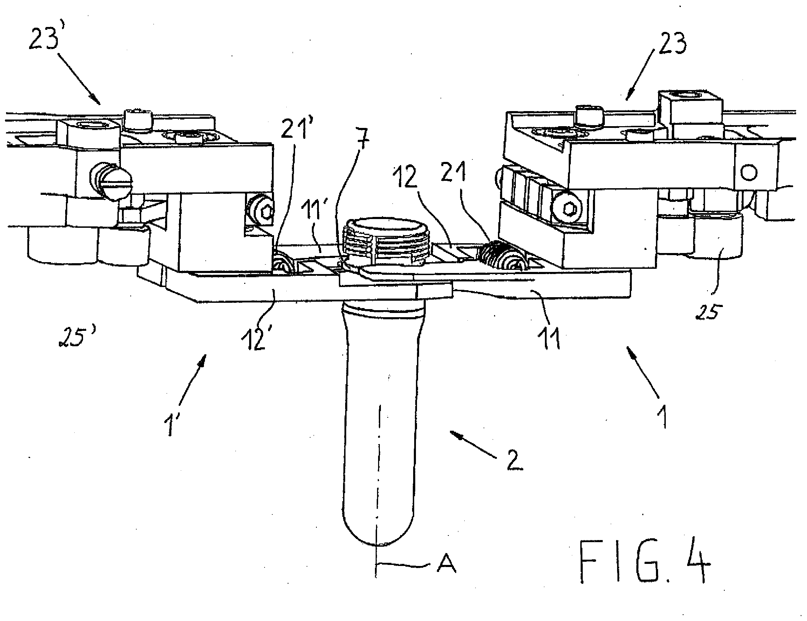

Figur 4 zeigt die Übergabe eines Behälters 2 von einer Klammer 1 zu einer anderen Klammer 1'. Der Behälter 2 weist sowohl einen Verschlusssicherungsring 7 als auch einen hier nicht sichtbaren Tragring 8 auf, wobei der Behälter 2 von den Klammern 1 und 1' oberhalb des Tragrings 8 und oberhalb und unterhalb des Verschlusssicherungsringes 7 gehalten wird. Der Klammerarm 11 der Klammer 1 ergreift den Behälter 2 an der Oberseite des Verschlusssicherungsringes 7, während der Klammerarm 12' der Klammer 1' den Behälter 2 unterhalb desselben ergreift. Der Klammerarm 11' der Klammer 1' ergreift den Behälter 2 an der Oberseite des Verschlusssicherungsrings 7 jedoch auf der dem Betrachter hier abgewandten Seite des Behälters 2. Der Klammerarm 12 der Klammer 1 ergreift den Behälter 2 ebenso wie der Klammerarm 12' der Klammer 1' auf der Unterseite des Verschlusssicherungsringes 7, jedoch wiederum der dem Betrachter abgewandten Seite des Behälters 2.

Die Klammerarme 11, 12 und 11', 12' der Klammern 1 und 1' werden jeweils durch ein Federelement 21 und 21' mit Kraft beaufschlagt, so dass sich die Klemmbereiche 14 der Klammerarme 11 und 12 sowie 11' und 12' aufeinander zu bewegen. Die Klammern 1 und 1' sind mit hier nicht gezeigten Befestigungsmitteln an den Trägern 23 und 23' befestigt.

Die Träger 23 und 23' weisen Steuerrollen 25 und 25' auf, die mit einer hier nicht gezeigten Kurve in Eingriff stehen, um die Klammern 1 und 1' aktiv zu steuern.

Figur 5 zeigt eine vergrößerte Darstellung des Klemmbereichs 14 des Klammerarms 11 aus Figur 2. Es ist der Unterstützungsblock 19 mit seiner Unterstützungsfläche 15 näher zu sehen, die im Falle des Haltens eines Behälters 2 an der Unterseite der Wulst 6 anliegt. Die Zentrierfläche 20 liegt zumindest teilweise am Umfang des Behälters 2 an. Der Klemmbereich 14 der Klammer 11 weist dabei einen schon beschriebenen Absatz 16 auf, dessen Höhe in etwa der Dicke der Wulst 6 des Behälters 2 entspricht. Die Klammer 1, 1' ist dabei so dimensioniert, dass die Dicke D1 der Klammer 1, 1' in etwa der Summe der Dicke D2, D3 sowie der Höhe des Absatzes 16 entspricht.

## Patentansprüche

1. Klammer (1, 1') zum Halten von Behältern (2) mit mindestens einem Mündungsbereich (3), einem Rumpfbereich (4) und einem Bodenbereich (5), wobei der Mündungsbereich mindestens eine Wulst (6, 7, 8) aufweist, wobei die Klammer (1, 1') zwei Klammerarme (11, 11', 12, 12') aufweist, die den Behälter (2) an dessen Umfang im Mündungsbereich (3) erfassen, wobei die Klammerarme (11, 11', 12, 12') bezüglich einer Längsachse (A) der Behälter (2) zumindest teilweise höhenversetzt angeordnet sind, **dadurch gekennzeichnet, dass** die Klammerarme (11, 11', 12, 12') aus je einem Befestigungsbereich (13) und einem Klemmbereich (14) bestehen, wobei der Befestigungsbereich (13) Vorrichtungen zur Befestigung an einem Träger oder einer Halterung aufweist, und der Klemmbereich (14) zum Klemmen der Behälter vorgesehen ist und zumindest teilweise am Umfang des zu haltenden Behälters (2) anliegt, und dass die beiden Klammerarme (11, 11', 12, 12') aktiv steuerbar sind, wobei die aktiv steuerbaren Klammerarme (11, 11', 12, 12') bezüglich der Längsachse der Behälter (2) so höhenversetzt angeordnet sind, dass der Klemmbereich des einen Klammerarms (12, 12') unterhalb und der Klemmbereich des anderen Klammerarms (11, 11') oberhalb eines Wulst (6, 7, 8) eines Behälters (2) angreift.

2. Klammer (1, 1') nach Anspruch 1, **dadurch gekennzeichnet, dass** die Klemmbereiche (14) unterschiedliche Dicken aufweisen.

3. Klammer (1, 1') nach wenigstens einem der Ansprüche 1 bis 2, **dadurch gekennzeichnet, dass** die Klammerarme (11, 11', 12, 12') so ausgebildet sind, dass der Behälter (2) im Mündungsbereich (3) bezüglich dessen Umfang an zwei sich im Wesentlichen gegenüberliegenden Seiten ergreifbar ist.

4. Klammer (1, 1') nach wenigstens einem der Ansprüche 1 bis 3, **dadurch gekennzeichnet, dass** der Behälter durch die beiden Klammerarme (11, 11', 12, 12') kraftschlüssig erfassbar ist.

5. Klammer (1, 1') nach wenigstens einem der Ansprüche 1 bis 4, **dadurch gekennzeichnet, dass** die Befestigungsbereiche (13) der Klammerarme (11, 11', 12, 12') Aussparungen (22) zur Befestigung an Trägern (23) aufweisen.

6. Klammer (1, 1') nach Anspruch 4, **dadurch gekennzeichnet, dass** die kraftschlüssige Erfassung der Behälter (2) durch je mindestens einen Magneten im Klammerarm (11, 11', 12, 12') hergestellt wird.

7. Verfahren zum Transportieren von in einem Mündungsbereich (3) mindestens eine Wulst (6, 7, 8) aufweisenden Behältern (2), wobei die Behälter (2) im Mündungsbereich (3) von Klammern (1, 1') gemäß zumindest einem der vorhergehenden Ansprüche 1 bis 6 gehalten werden, wobei von jeder Klammer (1, 1') der Klemmbereich des Klammerarms (11, 11') am Behälter (2) oberhalb der Wulst (6, 7, 8) angreift, während der Klemmbereich des anderen Klammerarms (12, 12') am Behälter (2) unterhalb der Wulst (6, 7, 8) angreift.

8. Verfahren nach Anspruch 7 **dadurch gekennzeichnet, dass** die Behälter (2) einen Übergabebereich durchlaufen, in dem sie von einer ersten Klammer (1, 1') an eine zweite Klammer (1') übergeben werden, wobei sowohl die erste Klammer (1, 1') als auch die zweite Klammer (1') die Behälter (2) oberhalb und unterhalb der Wulst (6, 7, 8) ergreift.

9. Verfahren nach Anspruch 7 oder 8, **dadurch gekennzeichnet, dass** die Behälter (2) mindestens einen Tragring (8) und mindestens einen Verschlusssicherungsring (7) aufweisen, wobei die Klammern (1, 1') während des gesamten Transportvorgangs oberhalb des Tragrings (8) angreifen.

10. Vorrichtung zum Transportieren von Behältern (2) mit Klammern (1, 1'), wobei die Behälter (2) mindestens einem Mündungsbereich (3), einem Rumpfbereich (4) und einem Bodenbereich (5) und der Mündungsbereich (3) mindestens eine Wulst (6, 7, 8) aufweist, wobei die Behälter (2) im Mündungsbereich (3) von Klammern (1, 1') nach wenigstens einem der Ansprüche 1 bis 6 ergreifbar sind

11. Vorrichtung nach Anspruch 10, **dadurch gekennzeichnet, dass** die Klammern (1, 1') an einem Transportstern und / oder einer Transportkette befestigt sind.

12. Vorrichtung nach wenigstens einem der Ansprüche 10 bis 11, **dadurch gekennzeichnet, dass** sie in eine Behälterbehandlungsanlage integriert ist, die eine Streckblasmaschine und / oder eine Füllmaschine und / oder eine Verschließmaschine und / oder eine Verpackungsmaschine umfasst.

## Claims

1. A clamp (1, 1') for the holding of containers (2) with at least one aperture region (3), a body region (4) and a base region (5), wherein the aperture region has at least one bulge (7, 7, 8), wherein the clamp (1, 1') has two clamp arms (11, 11', 12, 12') which grasp the container (2) on the periphery thereof in the aperture region (3), wherein the clamp arms (11, 11', 12, 12') are arranged offset vertically at least in part with respect to a longitudinal axis (A) of the containers (2),
**characterized in that**
the clamp arms (11, 11', 12, 12') comprise one fastening region (13) and one clamping region (14) in each case, wherein the fastening region (13) has means for mounting on a carrier or holder, and the clamping region (14) rests at least in part on the periphery of the container (2) to be held, and the two clamp arms (11, 11', 12, 12') are actively controllable, wherein the actively controllable clamp arms (11, 11', 12, 12') are arranged with respect to the longitudinal axis of the containers (2) in such a height offset manner that the clamping region of one clamp arm (12, 12') is located below and the clamping region of the other clamp arm (11, 11') is located above a bulge (6, 7, 8) of a container (2).

2. A clamp (1, 1') according to claim 1,
**characterized in that**
the clamping regions (14) have different thicknesses.

3. A clamp (1, 1') according to at least one of claims 1 to 2,
**characterized in that**
the clamp arms (11, 11', 12, 12') are designed in such a way that the container (2) is capable of being gripped in the aperture region (3) with respect to the periphery thereof on two sides which are substantially opposite each other.

4. A clamp (1, 1') according to at least one of claims 1 to 3,
**characterized in that**
the container can be force-fit detected by the tow clamping arms (11, 11', 12, 12').

5. A clamp (1, 1') according to at least one of claims 1 to 4,
**characterized in that**
the fastening regions (13) of the clamp arms (11, 11', 12, 12') have recesses (22) for fastening to carriers (23).

6. A clamp (1, 1') according to claim 4,
**characterized in that**
the force-fit detection of the containers (2) is produced by at least one magnet each in the clamping arm (11, 11', 12, 12').

7. A method of conveying containers (2) having at least one bulge (6, 7, 8) in an aperture region (3), wherein the containers (2) are held in the aperture region (3) by clamps (1, 1') according to at least one of the preceding claims 1 to 6, wherein of each clamp (1, 1') the clamping region of the clamp arm (11, 11') engages on the container (2) above the bulge (6, 7, 8), whilst the clamping region of the other clamp arm (12, 12') engages on the container (2) below the bulge (6, 7, 8).

8. A method according to claim 7,
**characterized in that**
the containers (2) pass through a transfer area in which they are transferred from a first clamp (1,1') to a second clamp (1'), both the first clamp (1, 1') and the second clamp (1') of the conainer (2) above and below the bulge (6, 7, 8).

9. A method according to claim to claim 7 or 8,
**characterized in that**
the containers (2) have at least one support ring (8) and at least one locking retaining ring (7), the clamps (1, 1') engaging above the support ring (8) during the entire transport operation.

10. An apparatus for the conveying of containers (2) with clamps (1, 1'), wherein the containers (2) have at least one aperture region (3), a body region (4) and a base region (5), and the aperture region (3) has at least one bulge (6, 7, 8), wherein the containers (2) are capable of being gripped in the aperture region (3) by clamps (1, 1') according to at least one of claims 1 to 6.

11. An apparatus according to claim 10,
**characterized in that**
the clamps (1, 1') are attached to a transport star and/or a transport chain.

12. An apparatus according to at least one of the claims 10 to 11,
**characterized in that**
it is integrated in a container treatment plant comprising a stretch blow moulding machine and/or filling machine and/or a capping machine and or a packaging machine.

## Revendications

1. Pince (1, 1') destinée à retenir des contenants (2) comprenant au moins une zone d'embouchure (3), une zone de corps (4) et une zone de fond (5), dans laquelle la zone d'embouchure présente au moins un renflement (6, 7, 8), dans laquelle la pince (1, 1') comprend deux bras de pince (11, 11', 12, 12') saisissant le contenant (2) à la périphérie de celui-ci dans la zone d'embouchure (3), dans laquelle les bras de pince (11, 11', 12, 12') sont décalés au moins en partie en hauteur par rapport à un axe longitudinal (A) des contenants (2), **caractérisée en ce que** les bras de pince (11, 11', 12, 12') sont constitués chacun d'une zone de fixation (13) et d'une zone de serrage (14), dans laquelle la zone de fixation (13) comprend des dispositifs pour la fixation à un support ou à un élément de retenue, et la zone de serrage (14) est destinée à serrer les contenants et s'applique au moins en partie contre la périphérie du contenant (2) à retenir, et **en ce que** les deux bras de pince (11, 11', 12, 12') peuvent être commandés activement, dans laquelle les bras de pince (11, 11', 12, 12') pouvant être commandés activement sont décalés en hauteur par rapport à l'axe longitudinal des contenants (2), de sorte que la zone de serrage de l'un des bras de pince (12, 12') agit au-dessous d'un renflement (6, 7, 8) d'un contenant (2) et que la zone de serrage de l'autre bras de pince (11, 11') agit au-dessus dudit renflement (6, 7, 8).

2. Pince (1, 1') selon la revendication 1,
**caractérisée en ce que**
les zones de serrage (14) présentent différentes épaisseurs.

3. Pince (1, 1') selon au moins l'une des revendications 1 à 2,
**caractérisée en ce que**
les bras de pince (11, 11', 12, 12') sont conçus de sorte que le contenant (2) peut être saisi dans la zone d'embouchure (3) par rapport à sa périphérie au niveau de deux côtés sensiblement opposés.

4. Pince (1, 1') selon au moins l'une des revendications 1 à 3,
**caractérisée en ce que**
le contenant peut être saisi par force par les deux bras de pince (11, 11', 12, 12').

5. Pince (1, 1') selon au moins l'une des revendications 1 à 4,
**caractérisée en ce que**
les zones de fixation (13) des bras de pince (11, 11', 12, 12') présentent des évidements (22) pour la fixation à des supports (23).

6. Pince (1, 1') selon la revendication 4,
**caractérisée en ce que**
la saisie à force des contenants (2) est obtenue par respectivement au moins un aimant dans le bras de pince (11, 11', 12, 12').

7. Procédé de transport de contenants (2) présentant au moins un renflement (6, 7, 8) dans une zone d'embouchure (3), dans lequel les contenants (2) sont retenus dans la zone d'embouchure (3) par des pinces (1, 1') selon au moins l'une des revendications précédentes 1 à 6, dans lequel, parmi chaque pince (1, 1'), la zone de serrage du bras de pince (11, 11') agit sur le contenant (2) au-dessus du renflement (6, 7, 8), tandis que la zone de serrage de l'autre bras de pince (12, 12') agit sur le contenant (2) au-dessous du renflement (6, 7, 8).

8. Procédé selon la revendication 7,
**caractérisé en ce que**
les contenants (2) traversent une zone de transfert dans laquelle ils sont transférés d'une première pince (1, 1') à une deuxième pince (1'), dans lequel aussi bien la première pince (1, 1') que la deuxième pince (1') saisit les contenants (2) au-dessus et au-dessous du renflement (6, 7, 8).

9. Procédé selon la revendication 7 ou 8,
**caractérisé en ce que**
les contenants (2) comportent au moins une bague de support (8) et au moins un circlip (7), dans lequel les pinces (1, 1') agissent au-dessus de la bague de support (8) pendant toute la procédure de transport.

10. Dispositif de transport de contenants (2) comprenant des pinces (1, 1'), dans lequel les contenants (2) comportent au moins une zone d'embouchure (3), une zone de corps (4) et une zone de fond (5) et la zone d'embouchure (3) comporte au moins un renflement (6, 7, 8), dans lequel les contenants (2) peuvent être saisis dans la zone d'embouchure (3) par des pinces (1, 1') selon au moins l'une des revendications 1 à 6.

11. Dispositif selon la revendication 10,
**caractérisé en ce que**
les pinces (1, 1') sont fixées à une étoile de transport et/ou à une chaîne de transport.

12. Dispositif selon au moins l'une des revendications 10 à 11,
**caractérisé en ce qu'**
il est intégré dans une installation de traitement de contenants qui est une machine d'étirage-soufflage et/ou une machine de remplissage et/ou une machine de fermeture et/ou une machine d'emballage.
